(19) **Europäisches Patentamt**

**European Patent Office**

**Office européen des brevets**

(11) **EP 1 272 546 B1**

(12) **EUROPEAN PATENT SPECIFICATION**

(45) Date of publication and mention
of the grant of the patent:
**02.08.2006 Bulletin 2006/31**

(51) Int Cl.:
***C08G 73/02*** *(2006.01)*

(21) Application number: **01925601.5**

(22) Date of filing: **04.04.2001**

(86) International application number:
**PCT/FI2001/000330**

(87) International publication number:
**WO 2001/074926 (11.10.2001 Gazette 2001/41)**

(54) **A METHOD AND AN APPARATUS FOR PREPARING POLYANILINE**

VERFAHREN UND APPARATUR ZUR HERSTELLUNG VON POLYANILIN

PROCEDE ET APPAREIL DE PREPARATION DE POLYANILINE

(84) Designated Contracting States:
**AT BE CH CY DE DK ES FI FR GB GR IE IT LI LU MC NL PT SE TR**

(30) Priority: **04.04.2000 FI 20000794**
**10.11.2000 US 709868**

(43) Date of publication of application:
**08.01.2003 Bulletin 2003/02**

(73) Proprietor: **Panipol OY**
**06101 Porvoo (FI)**

(72) Inventors:
• **JUSSILA, Matti**
**FIN-06400 Porvoo (FI)**
• **KÄRNÄ, Toivo**
**FIN-06400 Porvoo (FI)**

• **KOSKINEN, Jukka**
**FIN-02160 Espoo (FI)**
• **TURUNEN, Ilkka**
**FIN-53100 Lappeenranta (FI)**
• **PUHAKKA, Samuli**
**FIN-53600 Lappeenranta (FI)**

(74) Representative: **Hakola, Unto Tapani et al**
**Tampereen Patenttitoimisto Oy,**
**Hermiankatu 12B**
**33720 Tampere (FI)**

(56) References cited:
**EP-A2- 0 605 877        WO-A1-99/25753**
**US-A- 5 276 112         US-A- 5 278 240**
**US-A- 5 959 072**

## EP 1 272 546 B1

**Description**

FIELD OF THE INVENTION

The invention relates to a method for preparing polyaniline, in which aniline is polymerized in a reactor in a polymerization medium containing aniline and oxidant. The invention also relates to an apparatus for preparing polyaniline, comprising a polymerization reactor as well as feeding means for supplying aniline, polymerization medium and oxidant into the reactor.

BACKGROUND OF THE INVENTION

Electroconductive polymers have been subject to extensive research in recent years. Polymers which show electrical conductivity due to the structure of the polymeric chain (intrinsically electroconductive polymers) provide a chance to replace metal conductors and semiconductor materials in many applications. One significant application is antistatic shielding (ESD) and electromagnetic shielding (EMI).
In the group of intrinsically electroconductive polymers, one technically promising polymer is polyaniline. Polyaniline is prepared by polymerizing an aniline monomer. The nitrogen atoms of monomer units are bonded to the para-carbon in the benzene ring of the next monomer unit. Polyaniline exists in two basic types: non-electroconductive base forms, of which the most common is emeraldine, and electroconductive salt forms which are obtained by doping the polymer with a suitable protonic acid. The polymerization method, which is the subject of this invention, can be used to produce both basic types, depending on further processing.
Polyaniline can be used in many applications which require electroconductivity. A polyaniline which is known under the trademark PANIPOL and which is melt-processable and soluble and whose acidity is adjustable, can be used in several applications requiring electroconductivity. This polyaniline can be blended e.g. with a suitable matrix polymer by conventional blending methods used in the plastics industry, resulting in a homogeneous plastic material which maintains well its electroconductivity. Thus, the PANIPOL polyaniline is suitable for use in a variety of forms, such as

- film materials and coatings for use in packaging materials of packaging industry, components or parts of components for electronic devices, and parts for different structures;
- injection molded pieces for use in packages in electronics industry, containers suitable for the manipulation and transport of substances, casings such as casings for diskettes, components of copying machines, and pieces intended for industrial painting, shielding covers for sensitive electronic devices;
- extrusion molding products for use in pipes, pipe parts and seals for products in the form of profiles; table boards, containers and container intermediate layers for products in the form of plates and laminates; and telecommunication cables, heat cables and inner and outer layers of power cables for products in the form of cables;
- compression molding and rotational casting products for use in single pieces produced by compression molding and closed containers produced by rotational casting;
- calendering products for use in floor and wall coverings, such as plastic carpets and wallpapers;
- hot pressing and thermoforming products for use in conveyors, disposable gloves, elastomeric pieces and laminates,
- elastomers for use in conveyors, roller belts, elastomeric components for copying machines, seals and rubber-like materials;
- fibers for use in decorative materials (carpets, seat coverings and other textiles) in public rooms, vehicles, in explosion risk zones and in sterile rooms, clothing used under special conditions (headgear, footwear, work clothing), filters, dust collectors, membranes, conveyors.

In addition to the above-mentioned uses, polyaniline can be used in paints, varnishes and pigments, in corrosion protection and in parts for thermoelectric elements, accumulators or batteries.
The uses are particularly such in which antistatic shielding or EMI shielding is required, or in which electroconductive properties are otherwise useful. However, the list above is not meant to be exhaustive, and the use of polyaniline prepared by the method of the invention, or a form derived from it by further processing, is not necessarily limited to the alternatives described above.
Methods for polymerizing aniline, methods for further processing of polyaniline, and polymer properties are presented e.g. in European application publication 605 877, to which corresponds US patent 5,436,317, European application publication 627 746 and US patent 5,928,565. It is typical of all the known preparing methods to perform the polymerization as a batch process in a stirred tank reactor. The reaction is made by feeding a suitable oxidant, such as ammonium persulfate, into an aqueous solution of a protonic acid containing dissolved aniline in a reactor, to start polymerization. For example, according to US patent 5,436,317, aniline and oxidant can be gradually fed into the aqueous solution of HCl, and the molar mass of the polymer can be influenced by the ratio of the feeding rates of aniline and the oxidant. The resulting doped polymer can be dedoped with a base to produce a non-electroconductive polyaniline product which can be re-doped with a suitable acid to produce an electroconductive polymer with the desired properties. By the selection of the re-doping acid, it is possible to influence the electroconductive properties of the polymer.

By conventional methods, it is possible to prepare a large variety of polyaniline polymers whose properties can be adjusted according to the use. Up to date, the problem has been to control the reaction conditions to produce a polymer with a controlled uniform quality, for example a certain molecular weight distribution and/or particle size distribution.

SUMMARY OF THE INVENTION

It is an aim of the invention to present an improved preparing method whereby it is possible to better regulate the properties of polyaniline, either the non-electroconductive base form or the electroconductive form doped with an acid. To achieve this aim, the method according to the invention is primarily characterized in that the polymerization is performed in a reactor in which the ratio of the heat transfer surface to the reaction volume is at least 10/m, preferably at least 20/m. In practice, these conditions suitable for the final result are achieved e.g. in a tubular reactor by allowing a medium containing aniline and an oxidant to flow in a mixed flow through the tubular reactor. The reaction takes place preferably in a tubular reactor equipped with static mixers, wherein effective mixing is achieved. Static mixers are described in Perry's Handbook (Perry, R.H., Green, D.W., eds., Perry's Chemical Engineers' Handbook, 7th ed., McGrew-Hill, New York 1998, pp. 18-32 to 18-33). The static mixers consist of stationary diverters inside the tubular reactor which force the fluid media to mix themselves through a progression of divisions and recombinations.

By the combined effect of the high ratio between the cooling surface area and the reaction volume, and the effective mixing, a polymerization temperature is achieved which is as stable as possible and controllable. The effective mixing means that the mixing time of the reactants is short in comparison with the reaction rate. When there is a high ratio of the cooling surface to the reaction volume in the reactor, it is possible to operate in a narrow temperature range. The said ratio results in a relatively short distance to the heat transfer surface from each point throughout the whole volume of the liquid in the reaction volume. Thus, the required temperature difference between the heat transfer surface and the liquid to be cooled can be kept as small as possible, and the desired cooling effect can still be obtained. The temperature differences in all directions within the liquid volume can also be minimized. It can be assumed that the narrow temperature range so obtained (i.e. the uniformity of the temperature within the reaction volume) is advantageous for example for the reason that the local differences of the reaction rates in the reactor are small and the side reactions can be minimized. The reaction rates are in general dependent on the temperature in an exponential fashion. A product of uniform quality will thus be obtained.

The ratio between the heat transfer surface area and the reaction volume is obtained by dividing the surface area by the volume of the reaction medium, and its unit is $m^2/m^3$, *i.e.* $1/m$.

In this invention, it has been found that the temperature control and the effective mixing are very important for the degree of uniformity of the different properties of the obtained polymer particles, *i.e.* they exhibit narrow distributions.

These conditions can be best achieved in a well-mixed tubular reactor in which differences in concentration are small in the area of the cross-section of the tube and there is hardly any dispersion in the axial direction. A high ratio between the heat transfer surface and the volume is obtained by a suitably small tube diameter. A high capacity can be obtained with several parallel tubes. It is also possible to achieve a high cooling surface to reaction volume ratio by installing the cooling pipe system inside the reactor tube itself. In this case, the cooling pipe system can be designed to be similar to a static mixer, where effective mixing is achieved.

As polymerization takes place in a mixed medium flowing through the tubular reactor, a homogeneous product is achieved, particularly with respect to particle size distribution and molecular weight distribution, or the distribution widths can be adjusted. The medium is effectively mixed and the conditions are uniform in the area of each cross-section perpendicular to the flowing direction. Furthermore, the polymer structure can be easily affected by changing the reaction conditions. By adjusting the temperature, particularly the length of the polymer chains can be regulated.

The method in which the polymerization takes place primarily in a tubular reactor, can be either a batch process or a continuous process. In the first mentioned case, the polymerization medium containing the reactant is circulated through the tubular reactor; in the latter case, the starting agents are supplied in a continuous flow to the tubular reactor, and the medium in which polymerization has proceeded to a certain point is taken out at the other end of the tubular reactor as a continuous flow to further processing steps.

According to yet another embodiment, at least the oxidant is fed as a separate flow to the tubular reactor. The tubular reactor makes it possible to feed the oxidant to the flow of the polymerization medium at separate consecutive points. Similarly, other starting agents can be fed more at a suitable point or at successive points, such as a dopant or a monomer or another necessary additive. Further, if the oxidation requires a catalyst, it, too, can be fed at successive points. The solution also makes it possible to feed possible polymerization termination agents at desired points. All in all, it is possible to prepare polyaniline qualities with various properties in an adjustable and controllable way. To increase the capacity, the medium can be led simultaneously through two or more tubular reactors coupled in parallel.

The apparatus according to the invention is, in turn, characterized in that the reactor is a tubular reactor to whose initial end is connected one or more inlets for feeding a polymerization medium and reactants and whose terminal end is provided with an outlet for discharging the polymerization medium and the polymer. Using a tubular reactor, the conditions can be made uniform, and the concentrations and the temperature of the reactants can be controlled at each point in the reactor. The tubular reactor can be a part of a batch reactor, wherein there is circulation between the outlet and the inlet via an intermediate container, preferably equipped with mixing, or the tubular reactor can be a part of a continuous process, wherein the outlet is connected to a line leading to further processing of the polymer. According to an advantageous embodiment, the tubular reactor is equipped with static mixers, wherein the agents are subjected to effective mixing as they flow through the tubular reactor. According to yet another advantageous embodiment, there are two or more tubular reactors coupled in parallel, wherein the capacity can be increased.

The reactor can be cooled by circulating a cooling liquid in a cooling jacket surrounding the reactor. Another alternative is to place a cooling pipe system inside the reactor tube, which cooling pipe system can be designed in the same way as a static mixer.

BRIEF DESCRIPTION OF THE DRAWINGS

In the following, the invention will be disclosed more closely with reference to the appended drawings, in which

Fig. 1          shows an industrial application of the invention,

Fig. 2          shows an industrial application according to a second embodiment of the invention,

Fig. 3          shows an industrial application according to a third embodiment of the invention,

Fig. 4          shows an industrial application according to a fourth embodiment of the invention, and

Fig. 5          illustrates test arrangements of tests made on the invention,

Figs. 6 to 17    show the test results, and

Fig. 18         shows one embodiment of a tubular reactor in side view.

DETAILED DESCRIPTION OF THE PREFERRED EMBODIMENTS

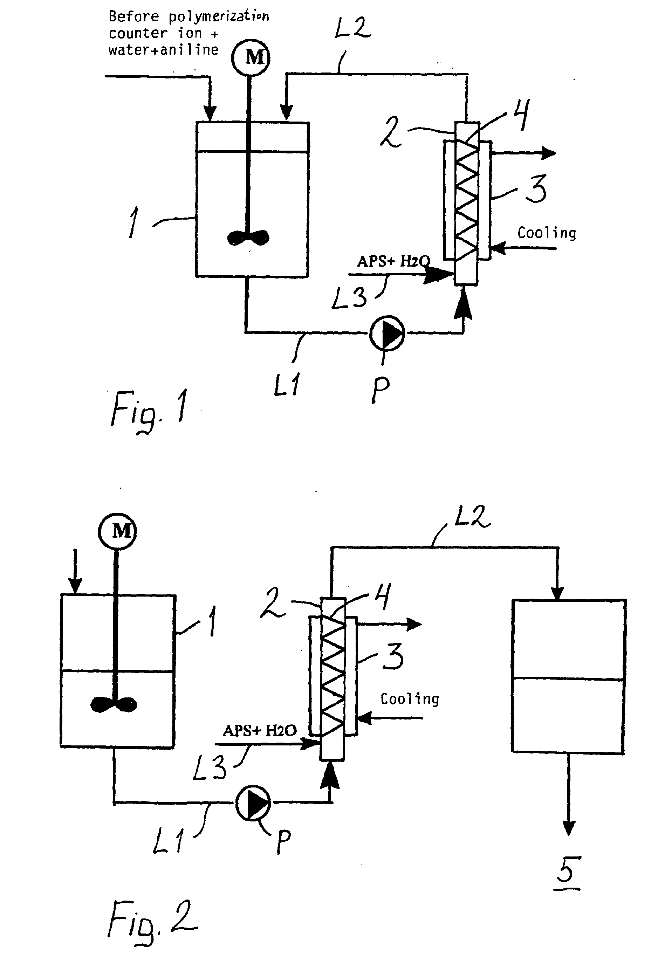

Figure 1 shows an apparatus for preparing polyaniline doped with an acid. The parts of the device comprise a mixing tank 1 and tubular reactor 2. a closed circulation being arranged therebetween by means of a pump P. The mixing tank 1 is equipped with an agitator rotated with a motor M. A feeding line L1 extends from the mixing tank 1 via the pump P to the initial end of the tubular reactor 2, to the inlet of the reactor 2, and a return line L2 extends from the outlet of the terminal end of the tubular reactor 2 to the mixing tank 1. A feeding line L3 for an oxidant is also connected to the initial end of the tubular reactor 2, and the tubular reactor is equipped with a cooling agent circulation by making a cooling agent circulate through a jacket 3 of the tubular reactor. Static mixers inside the tubular reactor are indicated with reference numeral 4.

The process shown in Fig. 1 operates in the following way: First, an aqueous solution of protonic acid, aniline and, if necessary, other agents are added into the mixing tank 1. Aniline can be dissolved in water for example in the mixing tank. Protonic acid makes the polymerizing medium acidic, thereby making the polymeration reaction possible. Protonic acid also acts as a so-called dopant which donates the counter anion and forms a salt with the polyaniline base. The acid used is normally sulfuric acid, but also other water-soluble protonic acids can be used.

The actual polymeration takes place by the effect of an oxidant fed into the process. Dissolved into a suitable medium, such as water, the oxidant is supplied to the initial end of the tubular reactor 2, to which the mixture of said polymerizing medium (water), protonic acid and aniline monomer is fed along the line L1. The oxidant is introduced in a suitable dose along a separate line L3 to the initial end of the tubular reactor 2. For example, peroxy compounds can be used as the oxidant. A commonly used oxidant is ammonium persulfate (denoted APS in the figures). Also other oxidants can be used. The polymeration takes place while the polymerizing medium, the aniline monomer dissolved therein and the oxidant flow through the tubular reactor 2. In the process of Fig. 1, the residence time in the tubular reactor 2 is such that polymerization is not complete, but the substances are circulated several times through the tubular reactor.

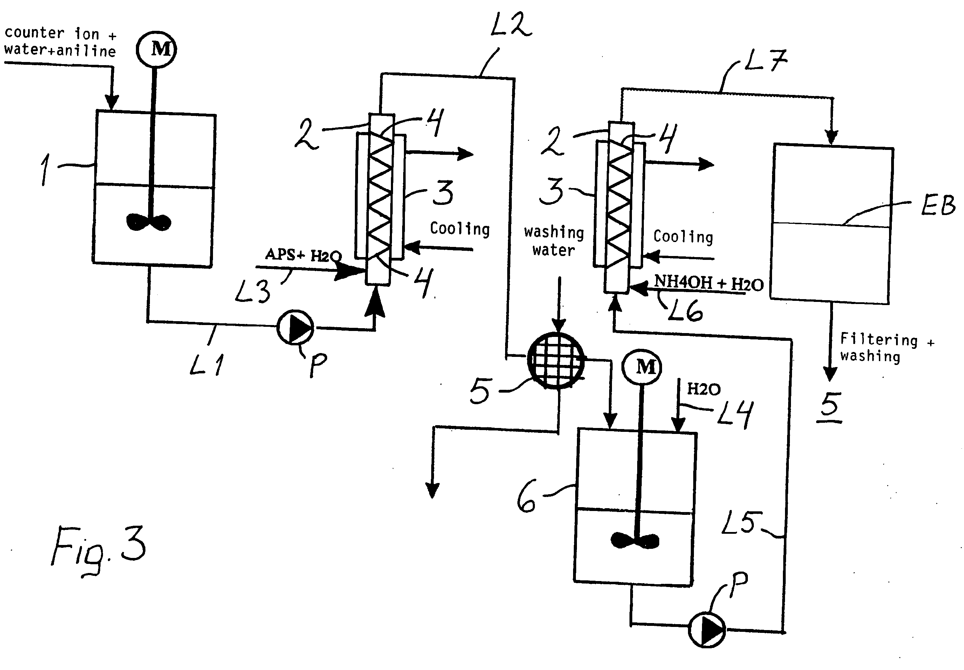

Figure 2 shows a second feasible alternative. Here the tubular reactor 2 is part of a continuous process. From a mixing tank 1 provided with agitation and continuously supplied with water, aniline and protonic acid, a feeding line L1 extends via a pump P to an inlet in the initial end of the tubular reactor 2. At the initial end, there is also an inlet for an oxidant, to which a feeding line L3 is introduced. An outlet at the terminal end of the tubular reactor 2 is connected to a discharge line L2 for leading the polymer in form of solid particles to a separation and washing stage, which is shown schematically with reference numeral 5 in the figure. The residence time in the tubular reactor is such that after the polymerizing agent and the reactants contained in it have flown once through the reactor, the polymerization has taken place with a desired yield. Thus, the flow obtained from the tubular reactor 2 may thus still contain unreacted anilin monomer which is discharged with the filtrate and in the wash of the filtered polymer.

Figure 3 shows a third embodiment suitable for industrial production. Also this involves continuous polymerization with a tubular reactor 2 equipped with static mixers 4, and the parts and their functions are, for the initial end up to the discharge line L2, the same as in Fig. 2. The polymerization is followed by aftertreatment, in which the polyaniline is converted to the base form with a suitable base in a so-called dedoping process. A discharge line L2 extends from the tubular reactor 2 via a polymer separation and washing stage 5 to an intermediate container 6 which is equipped with an agitator and to which water is added via a feeding line L4. A discharge line L5 extends from the intermediate container 6 to a second tubular reactor 2 equipped with static mixers 4. To the initial end of this tubular reactor, base supply is introduced via a line L6. The base used is normally an aqueous solution of ammonia. Also other bases, such as NaOH are possible. Also this tubular reactor 2 is equipped with cooling. The polymer dedoped to the base form is led from the terminal end of the tubular reactor 2 along a discharge line L7 to the polymer separation and washing stage 5 again, in which the polymer in alkaline form can be separated and washed.

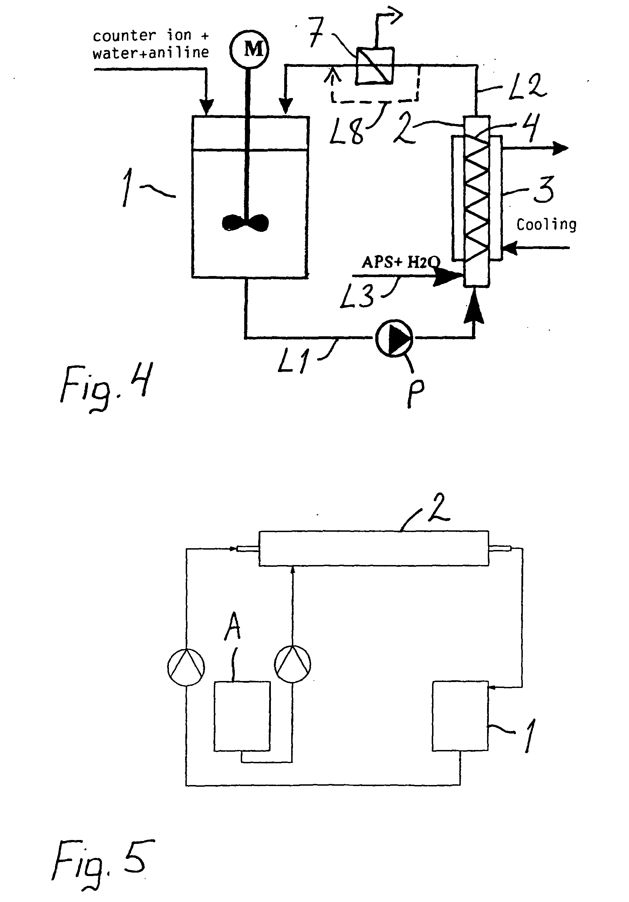

Figure 4 shows yet another alternative which is primarily a modification of the process of Fig. 1. Here the supply of the reactants is continuous, and the process is a semi-batch type or a continuous process depending on whether substances not participating in the reaction are continuously taken away. The circulation of the polymerizing agent, the reactants therein and the final product is implemented in the same way as in Fig. 1, but the return line L2 comprises continuous separation 7 of solid polymer for example by filtering, wherein the reactants dissolved in the polymerizing agent and soluble aniline oligomers not yet separated circulate between the mixing tank 1 and the tubular reactor 2. In the figure, broken lines illustrate a bypass line L8 on the return line L2, whereby polymer separation can be bypassed. If necessary, the circulation also comprises water separation. By adjusting the ratio between the flow through the separation and the bypass flow, it is possible to affect the ratio between the oligomer and the polymer in the polymerization medium.

In all of the above-mentioned embodiments, it is possible to have several tubular reactors 2 equipped with static mixers in parallel, wherein the capacity can be increased. In view of controlling the reaction conditions, it is also advantageous to use several smaller reactors with a small cross-sectional area in parallel, instead of one large reactor. Furthermore, it is possible to have two or more tubular reactors in series, wherein an intermediate container may be provided between two consecutive tubular reactors to level the concentrations. There may naturally be such series of tubular reactors and intermediate containers in parallel.

Of course, a high ratio of cooling surface to volume can be obtained in laboratory-scale reactors. However, a production process is not feasible in these reactors. The invention relates to methods applicable in production scale as well as production-scale apparatuses. If the production capacity is small, a simple tubular reactor will be enough where the heat transfer surface is its inner circumferential wall. For example if the diameter of the tubular reactor is 0.2 m, the ratio is 20/m. With larger production capacities, the construction where inside the reactor tube there are small cooling pipes surrounded by reaction liquid for adding the heat transfer surface are needed.

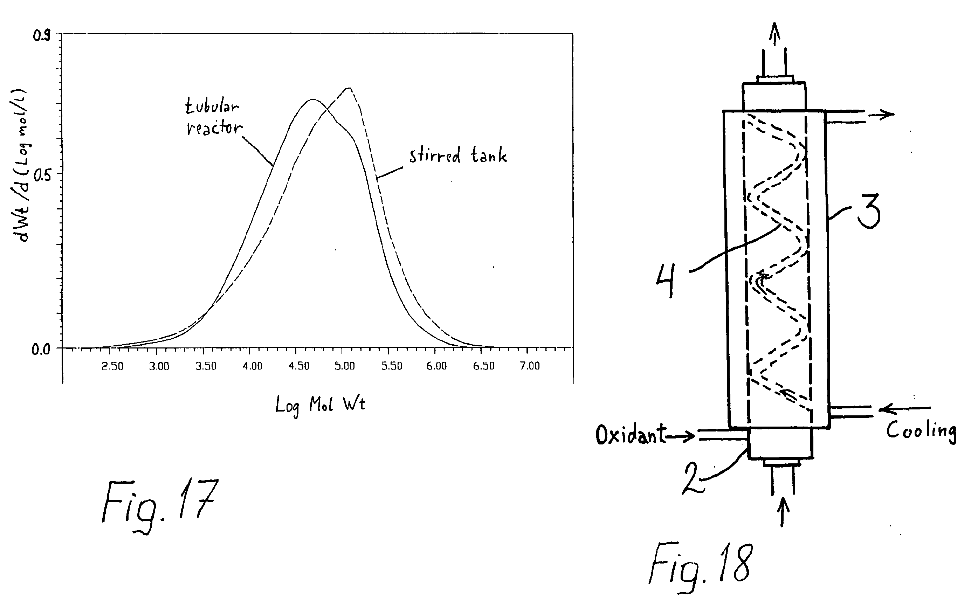

Further, the reactor may have static mixers which at the same time act as heat transfer surfaces. Fig. 18 shows a tubular reactor 2 where the cooling agent is also led to a heat transfer conduit system inside the reactor, in addition to being led to the cooling jacket 3. The heat transfer conduits can extend across the flow of the reaction medium and cause mixing on the same principle as static mixers, at the same time as they cause the cooling of the medium. The heat transfer conduits can be designed to have the external shape and position typical of static mixers. The tubular reactor 2 may have both static mixers 4 without the cooling agent flow and static mixers 4 with the cooling agent flow. Static mixers containing the cooling agent flow at the same time increase the heat transfer surface for a tubular reactors whose cross-sectional dimensions are too large to attain the desired ratio of heat transfer surface to reaction volume. The tubular reactor shown in Fig. 17 can be used in all embodiiments shown in Figs. 1 to 4.

The invention is not limited solely to the above-mentioned reactants (acid and oxidant), but it is also possible to use other reactants in all the processes presented in the Figs. 1 to 4.

In an aqueous polymerization medium, several protonic acids or mixtures thereof are feasible. Protonic acids which can be used to form a complex with the aniline monomer and to make it possible for the aniline monomer to be dissolved in water, include hydrochloric acid, hydrogen bromide, sulfuric acid, perchloric acid, nitric acid, phosphoric acid, phosphonic acid, methanesulphonic acid, trifluoromethanesulphonic acid, toluenesulphonic acid, dodecylbenzenesulphonic acid (DBSA), acetic acid, trichloroacetic acid, trifluoroacetic acid, and formic acid. It is also possible to use a mixture of these protonic acids. Also Lewis acids can be used. The invention is not limited to the use of the above-mentioned acids.

Furthermore, several known oxidants can be used in polymerizing aniline. Oxidants which can be used for oxidative polymerization of aniline monomers include ammonium persulfate, $K_2Cr_2O_7$, $KIO_3$, $FeCl_3$, $KMnO_4$, $KBrO_3$, $KClO_3$ peracetic acid or hydrogen peroxide.

Particularly advantageous oxidants are peroxide compounds, particularly peracetic acid or hydrogen peroxide which are effective but have been considered dangerous. The peracetic acid and hydrogen peroxide are reactive but their use has been previously limited by the uncontrollability of the conditions. In connection with these oxidants, a suitable catalyst is used which can be supplied into the tubular reactor in the same flow with the oxidant or separately so that a catalytically effective quantity of it is provided in the reaction medium. The peroxide oxidant can be introduced as a separate flow to the initial end of the tubular reactor The control of these peroxide oxidants can be increased by feeding the oxidant into the tubular reactor to the flow of the polymerization medium at separate consecutive points.

Further, the term aniline comprises in this context also substituted anilines.

The polymerization can be effected at a desired temperature, which can be adjusted by means of the cooling system. In some cases it may be desirable to conduct the polymerization at a temperature higher than the ambient temperature. For example a suitable temperature can be selected from the range of - 25°C to +70°C. Low temperatures below zero Celsius can be attained by using, in addition to the monomer, oxidant, acid and possible other constituents, an agent that acts as freezing point depressant for the polymerization medium. To act as a freezing point depressant, the agent must be soluble in the liquid phase of the polymerization medium used. When the freezing point of water used as the polymerization medium is to be lowered, the freezing point depressant can be selected among water-soluble organic compounds or inorganic salts. Examples of suitable organic compounds are methanol and ethanol, and examples of inorganic salts are sodium chloride and potassium chloride. The freezing point depressant can be introduced in the mixing tank 1 or at any point before the tubular reactor 2, provided that it will be dissolved to the required concentration to lower the freezing point.

Also, an aqueous polymerization medium is not the only agent feasible for use as a carrier for dissolving reactants and carrying produced polymer particles, even though water is an inexpensive and safe process medium for this purpose. Also organic media are feasible, if the nature of the reactants requires organic solvents. Feasible organic media include *e.g.* toluene, methanol or ethanol. The low polymerization temperature, e.g. below zero, can be attained by choosing an organic medium whose freezing point is below zero Celsius. The freezing points of the three above-mentioned substances are far below zero Celsius.

The invention is also not limited to the presented method of polymerization, but also emulsion polymerization is possible.

Similarly, the invention is not limited to the use of static mixers in the tubular reactor, but also dynamic mixers can be used, which can be of rotor/stator type.

In the following, tests performed on the invention will be described. The tests should not be interpreted to restrict the invention.

1. Analysis of samples

By using a device constructed for the purpose, the quality and properties of the produced polyaniline were determined with respect to three different factors, which were degree of oxidation, particle size distribution, and so-called intrinsic viscosity of the polymers.

The analysis of the product was not performed directly on the final product obtained from the semi-batch reactor, but the separated solid matter was subjected to an ion exchange process in which the polyaniline salt form produced in the reactor was converted to a so-called polyaniline emeraldine base (EB) by dedoping.

The aftertreatment process was the following: After polymerization, the solid matter (200 to 400 g) filtered out from the mother liquor was dissolved in 25 wt-% ammonia solution (1400 ml) in which it was allowed to react overnight under intensive agitation. After the ion exchange, the polyaniline was washed with water to remove ammonium sulfate produced in the ion exchange process from the polymer. After the washing with water, an alcohol washing was performed with etanol or methanol to remove possible by-products and water bound in the solid matter. After this multi-step ion exchange and washing process, the resulting polyaniline EB form was dried in a vacuum at a temperature of 42°C, and after drying, the sample was ready for analysis.

1.1 Degree of oxidation

To determine the degree of oxidation of the polyaniline, an infrared range adsorption spectrum of the produced polyaniline was measured in a wave number range from 4000 to 400 1/cm, where the degree of oxidation was calculated on the basis of the ratio of heights of peaks present around the wave number ranges of 1575 to 1600 1/cm and 1500 to 1520 1/cm. For example, Asturias and MacDiarmid (G.E. Asturias, A.G. MacDiarmid, The oxidation state of the "Emeraldine" base, Synthetic Metals, 29 (1989), E157-E162) have demonstrated a correlation between said absorption peaks and the degree of oxidation of polyaniline.

To perform a FT-ir analysis, a KBr tablet of 0.3 wt-% was made of the sample to be examined, by weighing 0.003 g of polyaniline and 0.100 g of potassium bromide, by griding the obtained mixture in a mortar to homogenize it, and by compressing a tablet of the KBr polymer powder under a pressure of 8 bar.

1.2 Particle size distribution

The particle size distribution of polyaniline suspended in water was determined with a Coulter LS 130 device. 5 grams of polyaniline EB form was suspended in 40 ml of water, after which a required quantity, determined by the device, of the suspension was fed into the device. Before taking the actual measurement, the sample was bombarded with ultrasound for 15 seconds to break possible agglomerates. Of the measurement results, the particle size distribution was computed with a program supplied by the device manufacturer, applying Fraunhofer's mathematical model to determine the real distribution from the measurements taken by the device. A particle size distribution based on volume is illustrated in the figures, and an average size is given in the following examples on the basis of the volume-average distribution.

1.3 Intrinsic viscosity

Intrinsic viscosity was determined with an Ubbelohde capillary viscometer of Iic class. Said device is used to measure the efflux time of the tested solution through a capillary tube at a constant temperature. The mixture to be analyzed was prepared by dissolving 0.063 g of EB powder in 35 ml of 96-98 % sulfuric acid of *pro analysis* quality; the concentration of the solution prepared in this way was thus approximately 0.1 weight-% in relation to the polymer.

To determine the intrinsic viscosity, one must determine the specific viscosity of the polymer, which is obtained by formula (1)

$$\eta_{sp} = \frac{(\eta - \eta_0)}{\eta_0} \cong \frac{(t - t_0)}{t_0} \tag{1}$$

in which

$\eta_0$    viscosity of the solvent,
$\eta$    viscosity of the solution,
$t_0$    efflux time measured for the solvent in the viscometer,
$t$    efflux time measured for the solution in the viscometer.

For analysis of the samples, the method for determining a one point limiting viscosity number presented by Solomon and Cuitan was used (O.F. Solomon, I.Z. Cuita, Determination de la viscosité intrinsèque de solutions de polymères par une simple determination de la viscosité, Journal of Applied Polymer Science, VI (1962), 24, 683-686). The method is based on the following formula

$$[\eta] = \frac{1}{c} \cdot \sqrt{2 \cdot (\eta_{sp} - \ln \eta_r)} \tag{2}$$

in which $\eta_{sp}$ is derived from the formula (1).

The term $\eta_r$ in the formula refers to the viscosity ratio of the polymer solution, and it is defined in the following way:

$$\eta_r = \frac{\eta}{\eta_0} \cong \frac{t}{t_0}$$

$$(3)$$

The unit of concentration $c$ is g/dl, *i.e.* g/100 ml, for which reason the unit of limiting viscosity numbers obtained by the formula (2) is dl/g.

In all the examples, a tubular reactor 2 is used, whose length is 3.0 m and diameter 10 mm. The linear flow rate in the reactor is 0.3 m/s in all the examples. The tubular reactor was equipped with static mixers of the SMXL type (Sulzer Chemtech GmbH).

The polymerization of aniline in the tubular reactor was examined with a process presented in Fig. 5. An oxidant was pumped from a container A and a monomer-acid-water mixture from a tank 1 to the tubular reactor 2 by simultaneously circulating the solution discharged from the reactor 2 via the tank 1 and by supplying oxidant into the circulation system. In the tests carried out, the effect of the concentration and feeding rate of the oxidant and the starting temperature of the polymerization on the final product of the process was examined. The parameters of the test series are presented in Table I.

TABLE I. Polymerization of aniline in a tubular reactor. Variables of the test series in different test runs.

| Test | weight-% % | p(Ox) dm³/h | $T_s$ C | $t_p$(Ox) min |
|---|---|---|---|---|
| 1 | 35 | 10 | 4 | 15 |
| 2 | 35 | 10 | 15 | 15 |
| 3 | 20 | 15 | 4 | 22 |
| 4 | 20 | 15 | 15 | 22 |
| 5 | 20 | 10 | 4 | 33 |
| 6 | 20 | 10 | 15 | 33 |

In the table, the markings indicate the following:

weight-%      concentration of the oxidant fed into the reactor in weight percent,
p(Ox)          feeding rate of the oxidant,
$T_s$            starting temperature of the polymerization reaction, and
$t_p$(Ox)       period of feeding of the oxidant.

In all the tests in the series, the composition of the starting batch of the monomer was kept constant. Polymerization was interrupted by turning off the feeding of the oxidant after the total molar quantity fed into the process was 1.25 times the initial molar quantity of aniline. Ammonium peroxosulfate was used as the oxidant.

The reactor apparatus was cooled with a cooling liquid circulating in the reactor jacket.

The following examples illustrate different combinations of tests of table 1.

Example 1. Effect of initial temperature level at starting of polymerization on the product.

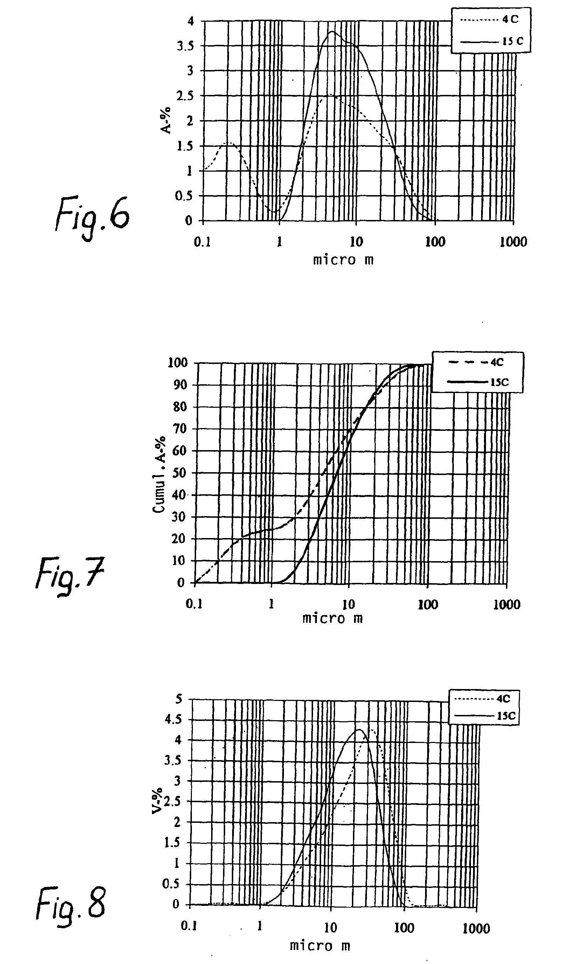

An oxidant with concentration of 20 weight percent was fed into the described process at a rate of 15 dm³/h as shown in Table 1. Depending on the test, the polymerization of aniline was started at two different temperatures, 4°C and 15°C. The effect of the conditions on the area-average particle size distribution of solid particles is shown in Fig. 6. Figure 7 shows the corresponding cumulative size distribution.

It can be seen from Figs. 6 and 7 that the share of small polymer particles can be increased by reducing the initial temperature level of polymerization. On the other hand, the share of large particles can be increased by raising the initial temperature, and this is shown in the results as a narrowing of the distribution. Thus, the share of small particles of the total surface area is increased as the temperature at which the polymerization is started is lowered.

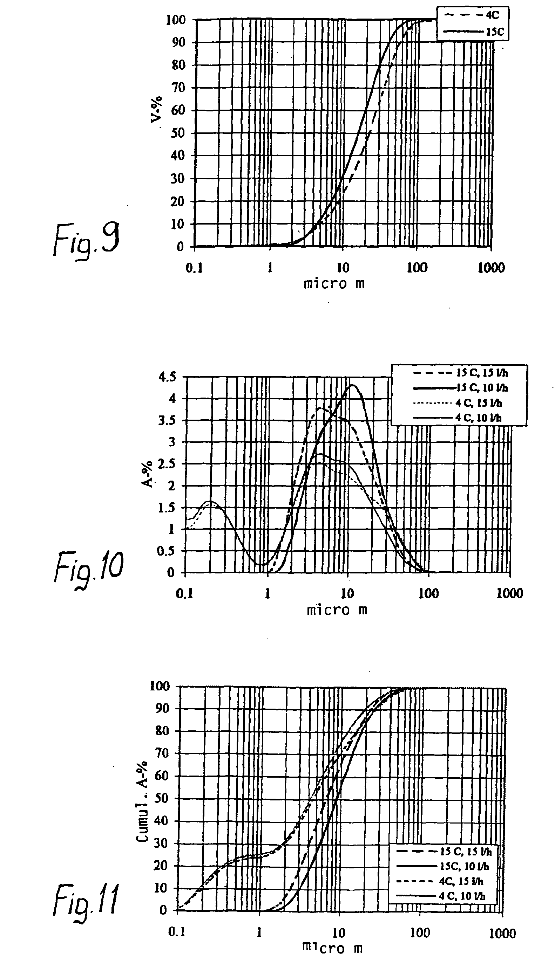

Figure 8 shows a volume-average particle size distribution of the above-mentioned tests, and Fig. 9 shows the corresponding cumulative volume-average particle size distribution. It can be seen from Figs. 8 and 9 that contrary to the case of area-average size distribution, when looking into the volume-average particle size distribution, the share of large particles is increased when the initial temperature level is lowered.

Example 2. Effect of the feeding rate of the oxidant on the product.

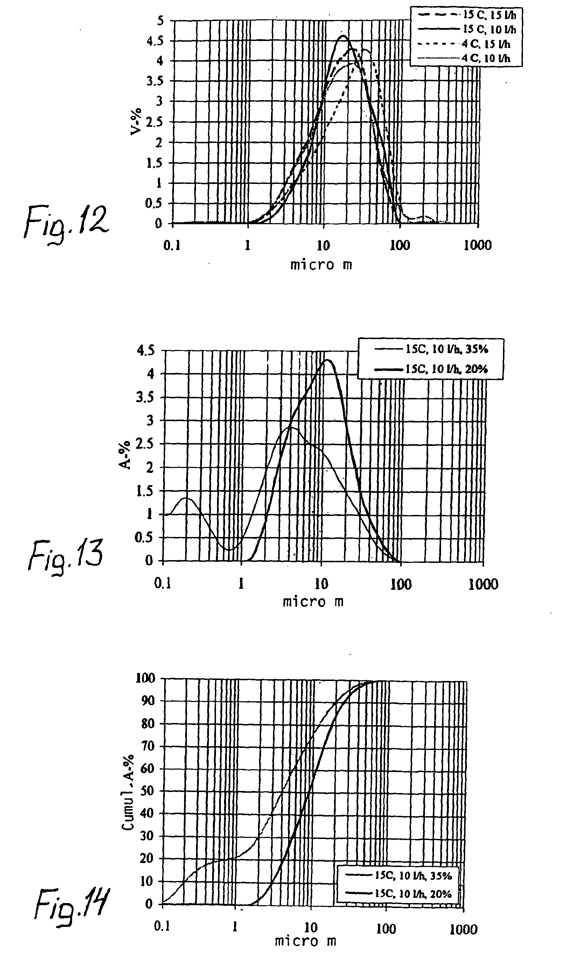

An oxidant with a concentration of 20 weight percent was fed into the described semi-batch process at rates 10 and 15 dm$^3$/h according to Table I. The polymerization of aniline was started, depending on the test, at two different temperatures, 4°C and 15°C. The effect of the conditions on the area-average particle size distribution of the solid particles is presented in Fig. 10. Figure 11 shows the corresponding cumulative size distribution.

It can be seen from Figs. 10 and 11 that at low temperatures of polymerization starting, the effect of the feeding rate of the oxidant is not as great as at temperatures of 15°C. In fact, the effect of the feeding rate is reversed when the temperature is reduced. It can be seen from the figures that at a temperature level of 15°C, an increase in the feeding of the oxidant will increase the share of small-size particles in the total surface area. On the other hand, the distribution can be narrowed by feeding the oxidant at a rate of 101/h instead of 15 1/h.

Another finding related to the distributions is that the effect of the feeding rate of the oxidant at 4°C is insignificant when compared to a higher temperature level. It can be seen from Fig. 10 that at a low temperature, particles with a diameter of less than 1 μm are formed and, on the other hand, that at a high temperature, these particles are not formed, irrespective of the feeding rate of the oxidant.

Figure 12 shows the volume-average particle size distributions of the tests shown in Figs. 10 and 11. It can be seen from Fig. 12 that the effect of the temperature level and the feeding rate of the oxidant on the form of the volume-average particle size distribution is not as clear as on the distribution shown in Fig. 10. Of the effect of the examined variables on the volume-average particle size distribution, it can only be stated that a product with the widest distribution is obtained when the polymerization is performed at a temperature of 4°C and the oxidant is fed at a rate of 10 l/h.

Example 3. Effect of concentration of the supplied oxidant on the product.

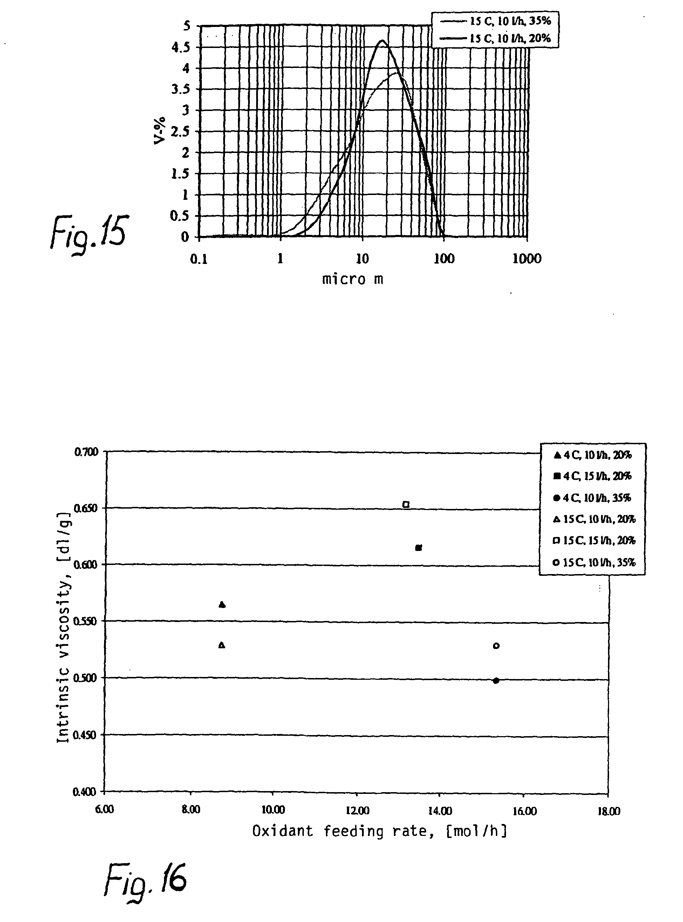

An oxidant with a concentration of 20 and 35 weight percent was supplied into the semi-batch process according to Table I at a rate of 10 l/h. The polymerization of aniline was started at the temperature of 15°C. The effect of the conditions on the area-average particle size distribution of solid particles is presented in Fig. 13. Figure 14 shows the corresponding cumulative distribution. It can be seen from Figs. 13 and 14 that at the temperature level of the tests, the effect of the concentration of the oxidant is the following. Supplying a concentrated oxidant will considerably increase the share of small particles and thereby reduce the average particle size ($d_{50}$) and widen the distribution.

Figure 15 shows the volume average particle size distributions of the tests corresponding to Fig. 13. It can be seen from Fig. 15 that also the volume average particle size distribution is narrower at a lower feeding rate of the oxidant.

Example 4. Effect of polymerization conditions on the molar mass of the product.

It can be seen from Fig. 16 that the limiting viscosity number measured for the product changes in dependence of the initial temperature level of the polymerization reaction and the feeding rate of the oxidant. Since the limiting viscosity number is known to describe the average molar mass of the polymer, on the basis of Fig. 16 it can be shown that the molar mass of the product can be adjusted by varying the initial temperature level and the feeding rate of the oxidant.

Example 5. Comparison of products prepared with a stirred tank reactor and a tubular reactor equipped with static mixers.

Polyaniline was prepared in a conventional stirred tank reactor where the ratio cooling surface to volume was 3.66/m, and in a tubular reactor used in preceding examples (ratio: 400/m). The oxidant was a 35 wt-% ammoniumpersulfate and the polymerization was conducted at 6.5°C. Oxidant was continuously supplied to the reactor up to the molar ratio oxidant/aniline of 1.25. The molar mass distributions of the products are shown in Fig. 17 (determination of the molar mass and polydispersity by GPC-measurements). The polyaniline prepared in the tubular reactor has a narrower distribution (polydispersity 4.4) and a smaller molar mass in average ($M_w$ = 96000) than the product prepared in the stirred tank reactor under similar conditions (polydispersity 5.6 and $M_w$ = 139000).

The invention is not limited to the embodiments shown hereinabove, but it can be modified within the scope of the invention presented by the accompanying claims.

**Claims**

1. A method for preparing polyaniline, in which aniline is polymerized in a reactor in a polymerization medium containing aniline and oxidant, **characterized in that** the polymerization is performed in a reactor in which the ratio of the heat transfer surface to the reaction volume is at least 10/m, preferably at least 20/m.

2. The method according to claim 1, **characterized in that** the polymerization is performed in a tubular reactor (2) by allowing a medium containing aniline and oxidant to flow in a mixed flow through the tubular reactor.

3. The method according to claim 2, **characterized in that** the mixing in the tubular reactor (2) is implemented with static mixers (4).

4. The method according to claim 2 or 3, **characterized in that** the polymerization is a continuous process.

5. The method according to claim 2 or 3, **characterized in that** the polymerization is a batch process, the medium circulating several times through the same tubular reactor (2) in a circulation flow.

6. The method according to claim 5, **characterized in that** polyaniline is continuously separated from the circulation flow of the medium.

7. The method according to any of the preceding claims, **characterized in that** the temperature of the polymerization medium within the reactor is in the range of from - 25°C to 70°C.

8. The method according to claim 7, **characterized in that** the temperature of the polymerization medium within the reactor is below 0°C.

9. The method according to claim 8, **characterized in that** freezing point depressants are used in an aqueous polymerization medium.

10. The method according to any of claims 2 to 9, **characterized in that** the medium is allowed to flow simultaneously through two or several tubular reactors (2) connected in parallel.

11. The method according to any of claims 2 to 10, **characterized in that** the oxidant is introduced as a separate flow to the initial end of the tubular reactor (2).

12. The method according to claim 11, **characterized in that** the oxidant is introduced in the tubular reactor (2) at different locations in the direction of flow of the medium.

13. The method according to any of the preceding claims, **characterized in that** the oxidant is a peroxy compound, particularly peracetic acid or hydrogen peroxide.

14. An apparatus for preparing polyaniline, comprising a polymerization reactor and means for feeding aniline, a polymerization medium and an oxidant into the reactor, **characterized in that** in said polymerizing reactor the ratio of the heat transfer surface to the reaction volume is at least 10/m, preferably at least 20/m.

15. The apparatus according to claim 14 c**haracterized in that** a heat transfer surface is arranged as a heat transfer conduit system inside the polymerizing reactor and that the ratio of the heat transfer surface formed by the surrounding inner wall to the reaction volume is smaller than 20/m, the heat transfer conduit system surrounded by the reaction volume increasing the ratio of total heat transfer surface to the reaction volume at least to the value of 20/m, preferably above 20/m.

16. The apparatus according to claim 14 or 15, **characterized in that** the polymerizing reactor is a tubular reactor (2), to whose initial end is connected one or more inlets for supplying polymerization medium and reactants and whose terminal end is provided with an outlet for discharging polymerization medium.

17. The apparatus according to claim 16, **characterized in that** the tubular reactor (2) is equipped with static mixers (4).

18. The apparatus according to claim 15 **characterized in that** the heat transfer conduit system is designed as static mixers (4).

19. The apparatus according to any of claims 16 to 18, **characterized in that** the apparatus comprises several tubular reactors connected in parallel.

**Patentansprüche**

1. Verfahren zur Herstellung von Polyanilin, bei welchem Anilin in einem Polymerisationsmedium, das Anilin und Oxidationsmittel enthält, in einem Reaktor polymerisiert wird, **dadurch gekennzeichnet, dass** die Polymerisation in einem Reaktor durchgeführt wird, bei welchem das Verhältnis der Wärmeübertragungsoberfläche zum Reaktionsvolumen wenigstens 10/m, vorzugsweise wenigstens 20/m beträgt.

2. Verfahren nach Anspruch 1, **dadurch gekennzeichnet, dass** die Polymerisation in einem röhrenförmigen Reaktor (2) durchgeführt wird, indem einem Medium, das Anilin und Oxidationsmittel enthält, erlaubt wird, in einem gemischten Strom durch den röhrenförmigen Reaktor zu fließen.

3. Verfahren nach Anspruch 2, **dadurch gekennzeichnet, dass** das Mischen in dem rohrförmigen Reaktor (2) mit statischen Mischern (4) vorgenommen wird.

4. Verfahren nach Anspruch 2 oder 3, **dadurch gekennzeichnet, dass** die Polymerisation ein kontinuierlicher Prozess ist.

5. Verfahren nach Anspruch 2 oder 3, **dadurch gekennzeichnet, dass** die Polymerisation ein Chargenprozess ist und das Medium mehrere Male durch denselben röhrenförmigen Reaktor (2) in einer Zirkulationsströmung im Kreis geführt wird.

6. Verfahren nach Anspruch 5, **dadurch gekennzeichnet, dass** das Polyanilin kontinuierlich aus der Zirkulationsströmung des Mediums abgetrennt wird.

7. Verfahren nach einem der vorstehenden Ansprüche **dadurch gekennzeichnet, dass** die Temperatur des Polymerisationsmediums innerhalb des Reaktors im Bereich von -25 °C bis 70 °C liegt.

8. Verfahren nach Anspruch 7, **dadurch gekennzeichnet, dass** die Temperatur des Polymerisationsmediums innerhalb des Reaktors unter 0 °C liegt.

9. Verfahren nach Anspruch 8, **dadurch gekennzeichnet, dass** in einem wässrigen Polymerisationsmedium Gefrierpunkterniedriger verwendet werden.

10. Verfahren nach einem der Ansprüche 2 bis 9, **dadurch gekennzeichnet, dass** das Medium simultan durch zwei oder mehrere röhrenförmige Reaktoren (2), die parallel verbunden sind, strömen gelassen wird.

11. Verfahren nach einem der Ansprüche 2 bis 10, **dadurch gekennzeichnet, dass** das Oxidationsmittel als gesonderter Strom am vorderen Ende des röhrenförmigen Reaktors (2) zugeführt wird.

12. Verfahren nach Anspruch 11, **dadurch gekennzeichnet, dass** das Oxidationsmittel in den röhrenförmigen Reaktor (2) an verschiedenen Positionen in Strömungsrichtung des Mediums zugeführt wird.

13. Verfahren nach einem der vorstehenden Ansprüche, **dadurch gekennzeichnet, dass** das Oxidationsmittel eine Peroxiverbindung ist, insbesondere Peressigsäure oder Wasserstoffperoxid.

14. Vorrichtung zur Herstellung von Polyanilin, die einen Polymerisationsreaktor und Mittel für die Zuführung von Anilin, einem Polymerisationsmedium und einem Oxidationsmittel in den Reaktor aufweist, **dadurch gekennzeichnet, dass** bei dem Polymerisationsreaktor das Verhältnis der Wärmeübertragungsoberfläche zum Reaktionsvolumen wenigstens 10/m, vorzugsweise wenigstens 20/m beträgt.

15. Vorrichtung nach Anspruch 14, **dadurch gekennzeichnet, dass** die Wärmeübertragungsoberfläche als ein Wärme übertragendes Leitungssystem innerhalb des Polymerisationsreaktors angeordnet ist und dass das Verhältnis der Wärmeübertragungsoberfläche, die durch die das Reaktionsvolumen umgebende Innenwand gebildet wird, kleiner als 20/m ist und das Wärme übertragende Leitungssystem, das vom Reaktionsvolumen umgeben ist, das Verhältnis der Gesamtwärmeübergangsoberfläche zum Reaktionsvolumen wenigstens auf einen Wert von 20/m, vorzugsweise über 20/m erhöht.

16. Vorrichtung nach Anspruch 14 oder 15, **dadurch gekennzeichnet, dass** der Polymerisationsreaktor ein rohrförmiger Reaktor (2) ist, mit dessen vorderem Ende ein oder mehrere Einlässe für die Zuspeisung von Polymerisationsmedium und Reaktionspartner verbunden ist, und dessen hinteres Ende mit einem Auslass für den Austrag von Polymerisationsmedium versehen ist.

**17.** Vorrichtung nach Anspruch 16, **dadurch gekennzeichnet, dass** der rohrförmige Reaktor (2) mit statischen Mischern (4) ausgerüstet ist.

**18.** Vorrichtung nach Anspruch 15, **dadurch gekennzeichnet, dass** das Wärme übertragende Leitungssystem als statische Mischer (4) ausgebildet ist.

**19.** Vorrichtung nach einem der Ansprüche 16 bis 18, **dadurch gekennzeichnet, dass** die Vorrichtung mehrere röhrenförmige Reaktoren aufweist, die parallel verbunden sind.


**Revendications**

**1.** Procédé de préparation de polyaniline, dans lequel l'aniline est polymérisée dans un réacteur dans un milieu de polymérisation contenant l'aniline et un oxydant, **caractérisé en ce que** la polymérisation est réalisée dans un réacteur dans lequel le rapport de la surface de transfert de chaleur au volume de réaction est d'au moins 10/m, de préférence d'au moins 20/m.

**2.** Procédé selon la revendication 1, **caractérisé en ce que** la polymérisation est réalisée dans un réacteur tubulaire (2) en laissant s'écouler un milieu contenant l'aniline et l'oxydant en un écoulement mélangé à travers le réacteur tubulaire.

**3.** Procédé selon la revendication 2, **caractérisé en ce que** le mélange dans le réacteur tubulaire (2) est mis en oeuvre à l'aide de mélangeurs statiques (4).

**4.** Procédé selon la revendication 2 ou 3, **caractérisé en ce que** la polymérisation est un procédé continu.

**5.** Procédé selon la revendication 2 ou 3, **caractérisé en ce que** la polymérisation est un procédé discontinu, le milieu circulant plusieurs fois à travers le même réacteur tubulaire (2) en un écoulement de circulation.

**6.** Procédé selon la revendication 5, **caractérisé en ce que** la polyaniline est continuellement séparée de l'écoulement de circulation du milieu.

**7.** Procédé selon l'une quelconque des revendications précédentes, **caractérisé en ce que** la température du milieu de polymérisation à l'intérieur du réacteur va de -25 °C à 70 °C.

**8.** Procédé selon la revendication 7, **caractérisé en ce que** la température du milieu de polymérisation à l'intérieur du réacteur est inférieure à 0 °C.

**9.** Procédé selon la revendication 8, **caractérisé en ce que** des mélanges antigel sont utilisés dans un milieu de polymérisation aqueux.

**10.** Procédé selon l'une quelconque des revendications 2 à 9, **caractérisé en ce qu'**on laisse le milieu s'écouler simultanément à travers deux réacteurs tubulaires ou plus (2) reliés de façon parallèle.

**11.** Procédé selon l'une quelconque des revendications 2 à 10, **caractérisé en ce que** l'oxydant est introduit en tant qu'écoulement séparé dans l'extrémité initiale du réacteur tubulaire (2).

**12.** Procédé selon la revendication 11, **caractérisé en ce que** l'oxydant est introduit dans le réacteur tubulaire (2) à différents endroits dans la direction d'écoulement du milieu.

**13.** Procédé selon l'une quelconque des revendications précédentes, **caractérisé en ce que** l'oxydant est un composé peroxy, en particulier un acide peracétique ou un peroxyde d'hydrogène.

**14.** Appareil de préparation de polyaniline, comprenant un réacteur de polymérisation et des moyens pour alimenter l'aniline, un milieu de polymérisation et un oxydant dans le réacteur, **caractérisé en ce que** dans ledit réacteur de polymérisation, le rapport de la surface de transfert de chaleur au volume de réaction est d'au moins 10/m, de préférence d'au moins 20/m.

15. Appareil selon la revendication 14, **caractérisé en ce qu'**une surface de transfert de chaleur est agencée sous forme d'un système de conduit de transfert de chaleur à l'intérieur du réacteur de polymérisation et **en ce que** le rapport de la surface de transfert de chaleur formée par la paroi interne l'entourant au volume de réaction est inférieur à 20/m, le système de conduit de transfert de chaleur entouré par le volume de réaction augmentant le rapport de la surface totale de transfert de chaleur au volume de réaction au moins jusqu'à la valeur de 20/m, de préférence jusqu'à une valeur supérieure à 20/m.

16. Appareil selon la revendication 14 ou 15,
    **caractérisé en ce que** le réacteur de polymérisation est un réacteur tubulaire (2), à l'extrémité initiale duquel sont reliées une ou plusieurs entrées destinées à alimenter le milieu de polymérisation et les réactifs et dont l'extrémité terminale est munie d'une sortie pour évacuer le milieu de polymérisation.

17. Appareil selon la revendication 16, **caractérisé en ce que** le réacteur tubulaire (2) est équipé de mélangeurs statiques (4).

18. Appareil selon la revendication 15, **caractérisé en ce que** le système de conduit de transfert de chaleur est conçu sous forme de mélangeurs statiques (4).

19. Appareil selon l'une quelconque des revendications 16 à 18, **caractérisé en ce que** l'appareil comprend plusieurs réacteurs tubulaires reliés de façon parallèle.

Before polymerization
counter ion +
water+aniline

L2

M

2

4

3

Cooling

APS+ H2O

L3

1

L1

P

Fig. 1

L2

M

2 4

3

Cooling

APS+ H2O

1

L3

L1

P

5

Fig. 2

Fig. 3

EP 1 272 546 B1

counter ion +
water+aniline

M

7

L2

L8   2   4

3

Cooling

1

APS+ H2O

L3

L1

P

**Fig. 4**

2

A

1

**Fig. 5**

Fig.6

Fig.7

Fig.8

17

Fig.9

Fig.10

Fig.11

Fig.12

Fig.13

Fig.14

*Fig. 15*

*Fig. 16*

EP 1 272 546 B1

Fig. 17

Fig. 18